# EUROPÄISCHE PATENTSCHRIFT

(11) **EP 4 567 391 B1**
(45) Veröffentlichungstag und Bekanntmachung des Hinweises auf die Patenterteilung: **28.01.2026**
(21) Anmeldenummer: 24216909.2
(22) Anmeldetag: 02.12.2024
(51) Int. Cl.: G01L 5/102

(54) **ZUGKRAFTMESSVORRICHTUNG**
TENSILE FORCE MEASURING DEVICE
DISPOSITIF DE MESURE DE FORCE DE TRACTION

(30) Priorität: 06.12.2023 DE 102023134151
(43) Veröffentlichungstag der Anmeldung: 11.06.2025
(73) Patentinhaber: Honigmann Industrielle Elektronik GmbH, 58285 Gevelsberg (DE)
(72) Erfinder: Herhaus, Jürgen, 42897 Remscheid (DE)
(74) Vertreter: Kalkoff & Partner Patentanwälte mbB

(56) Entgegenhaltungen:
- DE-A1- 10 016 254
- US-A- 5 251 492
- HONIGMANN: "Seilspannungssensor CableBull Dimensions (105559)", 3 February 2016 (2016-02-03), XP093260566, Retrieved from the Internet <URL:https://honigmann.com/bilder/download/105559_Dimensions.PDF> [retrieved on 20250318]

## Beschreibung

Die Erfindung betrifft eine Zugkraftmessvorrichtung zur Erfassung der auf ein Langgut wirkenden Zugkraft, mit einem Grundkörper, aufweisend
- eine erste äußere Stützeinheit mit einem zwischen einer das Langgut freigebenden Freigabestellung und einer das Langgut in einer Messstellung festlegenden Arretierungsposition verstellbaren ersten Führungselement,
- eine zweite äußere Stützeinheit mit einem mit dem Langgut in Anlage bringbaren zweiten Führungselement,
- eine zwischen der ersten und zweiten Stützeinheit angeordneten Umlenkeinrichtung mit einem Umlenkelement zur teilumschlingenden Anordnung des Langguts in der Messstellung und
- einer mit der Umlenkeinrichtung verbundenen Kraftmesseinheit zur Erfassung und Anzeige einer aus der Teilumschlingung auf das Umlenkelement wirkenden resultierenden Kraft.

Zugkraftmessvorrichtungen der eingangs genannten Art sind in vielfältigen Ausgestaltungen aus dem Stand der Technik bekannt. Sie dienen dazu, um in offenen oder geschlossenen Kraftsystemen, in welchen ein im unbelasteten Zustand flexibles Langgut wie Seile, Litzen, Drähte oder dergleichen unter Zugkraft gesetzt ist, die auf ein derartiges Langgut wirkende Zugkraft zu bestimmen. Die Ausgestaltung der Zugkraftmessvorrichtung erlaubt dabei eine bedarfsweise Verwendung an geeigneten Stellen des unter Zugkraft stehenden Langguts. Typische Anwendungsfälle für Zugkraftmessvorrichtungen sind z.B. die Zugkraftmessung von Abspannungen an Gebäuden, von Seilen in Fördereinrichtungen wie Fahrstühlen sowie von Abspannungen von Antennenmasten.

Das Grundprinzip bekannter Zugkraftmessvorrichtungen beruht dabei auf der Umlenkung des zu messenden Langguts an der Umlenkeinrichtung, welche hierzu in der Messstellung von dem Langgut teilweise umschlungen wird. Die Teilumschlingung wird dabei durch die erste und zweite äußere Stützeinheit bewirkt, wobei das zweite Führungselement der zweiten äußeren Stützeinheit und das erste Führungselement der ersten äußeren Stützeinheit in der Arretierungsposition derart angeordnet sind, dass diese eine Teilumschlingung des zwischen der ersten äußeren Stützeinheit und zweiten äußeren Stützeinheit angeordneten Umlenkelements der Umlenkeinrichtung bewirken. Die mit der Umlenkeinrichtung verbundene Kraftmesseinheit ist dazu geeignet, die aus der Teilumschlingung resultierende, senkrecht zur Zugkraftrichtung wirkende resultierende Kraft zu ermitteln, sodass sich über diese Messwerte, die auf das Langgut wirkenden Zugkräfte bestimmen lassen. Wesentlich für ein korrektes Messergebnis sowie deren Vergleichbarkeit ist dabei ein bei jeder Messung gleichbleibender Umschlingungswinkel des Umlenkelements.

Bei im unbelasteten Zustand flexiblen Langgütern wie Seilen, Drähten, Bändern oder dergleichen resultiert die aus der Teilumschlingung des Umlenkelements durch die Kraftmesseinheit ermittelte resultierende Kraft im Wesentlichen allein aus der auf das entsprechende Langgut wirkenden Zugkraft. Bei im Wesentlichen unflexiblen Langgütern, wie bspw. Stangen, Streben oder dergleichen, bewirkt die bei der Messung mittels der Zugkraftmessvorrichtung erzeugte Umlenkung des Langguts an der Umlenkeinrichtung jedoch auch eine biegeelastische Verformung des Langguts, welche zu zusätzlichen Querkräften an der Kraftmesseinheit führen und welche sich zu der aus der Zugkraft resultierenden Kraft hinzuaddieren. Die durch die Kraftmesseinheit bei der Umlenkung resultierenden Kraft setzt sich somit zusammen aus der auf das Langgut wirkenden Zugkraft sowie aus der bei der Umlenkung erzeugten biegeelastischen Verformung des Langguts. In Unkenntnis der Verhältnisse der beiden Kraftanteile zueinander erlaubt die ermittelte resultierende Kraft somit keine unmittelbaren Rückschlüsse über die auf das Langgut wirkende Zugkraft.

Die aus dem Stand der Technik bekannten Systeme erlauben somit nur dann eine zuverlässige Ermittlung der auf das Langgut wirkenden Zugkraft, wenn infolge der während der Messung bewirkten Umlenkung des Langguts dieses bei der Umlenkung keine oder nur eine unwesentliche biegeelastische Verformung erfährt.

Ein bekanntes System ist beispielsweise in dem Dokument "Seilspannungssensor CableBull Dimensions (105559)", 3. Februar 2016 (2016-02-03), URL:https:// honigmann.com/bilder/download/105559_Dimensions.PDF offenbart. Hiervon ausgehend liegt der Erfindung die Aufgabe zugrunde, eine Zugkraftmessvorrichtung bereitzustellen, die universell zur Messung der auf Langgüter wirkenden Zugkraft geeignet ist.

Die Erfindung löst die Aufgabe durch eine Zugkraftmessvorrichtung mit den Merkmalen des Anspruchs 1. Vorteilhafte Weiterbildungen der Erfindung sind in den abhängigen Ansprüchen angegeben.

Kennzeichnend für die erfindungsgemäße Zugkraftmessvorrichtung ist, dass zur Erfassung und/oder Anzeige einer zweiten aus der Teilumschlingung resultierenden Kraft durch die Kraftmesseinheit an dem Grundkörper beabstandet zur ersten Stützeinheit, bevorzugt im Bereich zwischen der ersten Stützeinheit und der Umlenkeinrichtung, eine Zusatzstützeinheit mit einem Kontaktelement angeordnet ist, das zwischen einer das Langgut in seiner Position an der Zusatzstützeinheit in der Messstellung des ersten Führungselements festlegenden Messposition und einer von dem Langgut beabstandeten Außer-Eingriffs-Position verstellbar ist.

Zur Erfassung der auf ein Langgut wirkenden Zugkraft mittels der erfindungsgemäßen Zugkraftmessvorrichtung wird diese derart an dem zu messenden Langgut angeordnet, dass dieses sich entlang des Grundkörpers zwischen den äußeren Stützeinheiten und der Umlenkeinrichtung erstreckt, sodass die beiden Führungselemente einerseits des Langguts und das Umlenkelement im Bereich zwischen den Führungselementen andererseits des Langguts angeordnet ist.

Nach einer entsprechenden Positionierung der Zugkraftmessvorrichtung an dem Langgut wird an der ersten Stützeinheit das Führungselement aus seiner Freigabestellung in die Arretierungsposition verstellt, wodurch das Langgut in eine Messstellung überführt wird, in der dieses unter geometrischer Abweichung von einer Geraden innerhalb seines linearbiegeelastischen Bereichs das Umlenkelement mit einem Umschlingungswinkel teilumschlingt, sodass die mit dem Umlenkelement verbundene Kraftmesseinheit eine erste aus der Teilumschlingung des in die Zugkraftmessvorrichtung eingefädelten Langguts resultierende Kraft ermittelt.

Bei einem Langgut, dass in der eingefädelten Messstellung an der Zugkraftmessvorrichtung eine biegeelastische Verformung erfährt, resultiert die durch die Kraftmesseinheit ermittelte resultierende Kraft zum einen aus der auf das Langgut wirkenden Zugkraft und zum anderen aus der biegeelastischen Verformung des Langguts. Die Ermittlung des zugkraftbezogenen Anteils der resultierenden Kraft erfolgt mittels der Zusatzstützeinheit der erfindungsgemäßen Zugkraftmessvorrichtung in der nachstehend beschriebenen Weise.

Unter Beibehaltung der bei der Ermittlung der ersten resultierenden Kraft bestehenden Messstellung des Langguts an der Zugkraftmessvorrichtung, d. h. unter Beibehaltung der Arretierungsposition des ersten Führungselements der ersten äußeren Stützeinheit wird das bei der Erfassung der ersten resultierenden Kraft in einer Außer-Eingriffs-Position angeordnete Kontaktelement der Zusatzstützeinheit aus der Außer-Eingriffs-Position in eine Messposition verlagert, in der dieses derart an dem Langgut anliegt, dass es nach einer nachfolgenden Verlagerung des ersten Führungselements aus der Arretierungsposition in die Freigabestellung die zuvor eingestellte Messstellung, unter Beibehaltung des zuvor bei der Ermittlung der ersten resultierenden Kraft bestehenden Umschlingungswinkels, beibehält. Auf diese Weise wird der Hebelarm, der sich zwischen der Umlenkeinrichtung und der ersten äußeren Stützeinheit erstreckt durch den Hebelarm ersetzt, welcher sich zwischen der Umlenkeinrichtung und der Zusatzstützeinheit erstreckt. In dieser Einstellung der Zugkraftmessvorrichtung wird eine zweite resultierende Kraft durch die Kraftmesseinheit erfasst, welche von der ersten gemessenen resultierenden Kraft aufgrund des veränderten Hebelarms abweicht.

Die beiden, einem Bediener der Zugkraftmessvorrichtung über die Anzeige der Kraftmesseinheit angezeigten resultierenden Kräfte ermöglichen es diesem, basierend auf den beiden Messwerten die tatsächliche, auf das Langgut wirkende Zugkraft zu ermitteln. Hierzu dienen vorbestimmte Kennfelder, die eine Vielzahl an Datensätzen aufweisen, deren Werte bevorzugt die ermittelten ersten und zweiten resultierenden Kräfte sowie deren Differenz umfassen. Die vorbestimmten Kennfelder weisen Kennlinien auf, welche es ermöglichen, aus den ermittelten resultierenden Kräften jeweils eine Zugkraft abzuleiten. Zusätzlich kann bevorzugt auch eine Biegesteifigkeit des Langguts ermittelt werden.

Ausgehend von den Kennlinienfeldern und den beiden ermittelten resultierenden Kräften kann somit in zuverlässiger Weise die gesuchte Zugkraft des untersuchten Langguts ermittelt werden. Ein Kennlinienfeld kann bspw. als Tabelle mit den zuvor erfassten Werten abgelegt werden, wobei zweckmäßigerweise vorgesehen sein kann, dass Zwischenwerte ausgehend von den vorermittelten Werten durch Interpolation ermittelt werden. Die Anzahl der vorbestimmten Werte zur Darstellung des Kennlinienfelds ist bevorzugt so hoch gewählt, dass die durch Interpolation ermittelten Zwischenwerte in zuverlässiger Weise ein genaues Kennlinienfeld definieren, das es ermöglicht, die tatsächliche auf das gemessene Langgut wirkende Zugkraft zu bestimmen.

Besonders bevorzugt umfasst dabei das vorbestimmte Kennlinienfeld so viele Datensätze, dass alle bei der Verwendung der jeweiligen Zugkraftmessvorrichtung messbaren Zugkräfte abgedeckt sind. Darüber hinaus können die Datensätze einen so großen Bereich der Biegesteifigkeit abdecken, dass alle infrage kommenden Werte der Zugkraft und Werte der Biegesteifigkeit für alle infrage kommenden zu messenden Langgüter abgedeckt sind.

In Kenntnis der ersten und zweiten resultierenden Kraft sowie bevorzugt einer zwischen diesen gebildeten Differenz, muss insofern der Nutzer keinerlei weiteren Eingaben vornehmen, sondern kann nach Erfassung der ersten und zweiten resultierenden Kraft unmittelbar über die Kennfelder die gesuchte Zugkraft ablesen.

Die erfindungsgemäße Zugkraftmessvorrichtung erlaubt es somit in komfortabler Weise, die auf ein Langgut wirkende Zugkraft zu ermitteln, welches im Rahmen der Messung auch eine biegeelastische Verformung erfährt. Somit weist die erfindungsgemäße Zugkraftmessvorrichtung ein besonders breites Einsatzspektrum auf, welches nicht auf flexible, d. h. in der Messstellung nicht biegeelastisch verformtes Langgut beschränkt ist. Die zur Ermittlung auf das Langgut wirkende Zugkraft erfolgt dabei unter einfacher Verwendung der Kennfelder, welche auf Basis der ermittelten ersten und zweiten resultierenden Kraft sowie deren Beziehung zueinander, insbesondere deren Differenzwert, erstellt werden.

Wesentlich für die Funktion der erfindungsgemäßen Zugkraftmessvorrichtung ist, dass mittels des Kontaktelements der Zusatzstützeinheit das Langgut vor einer Verlagerung des ersten Führungselements aus der das Langgut in der Messstellung festlegenden Arretierungsposition in die Freigabestellung in der Messstellung festgelegt wird, um so den in der Messstellung bestehenden Umschlingungswinkel des Umlenkelements beizubehalten. Der Umschlingungswinkel ist dabei bevorzugt <5°, besonders bevorzugt <2°, vorzugsweise <1,5°.

Eine Verstellung des Kontaktelements der Zusatzstützeinheit zwischen der Messposition und der Außer-Eingriffs-Position kann dabei grundsätzlich in beliebiger Weise erfolgen, bspw. indem das Kontaktelement verschwenkbar an der Zusatzstützeinheit angeordnet ist. Nach einer besonders vorteilhaften Ausgestaltung der Erfindung ist jedoch vorgesehen, dass das Kontaktelement quer zur Längsachse des in die Zugkraftmessvorrichtung eingefädelten Langguts verstellbar an der Zusatzstützeinheit angeordnet ist. Gemäß dieser Ausgestaltung der Erfindung wird das Kontaktelement im Wesentlichen senkrecht zur Längsachse des Langguts verstellt, um dieses zwischen der Außer-Eingriffs-Position und der Messposition zu verstellen. Diese Ausgestaltung der Erfindung ermöglicht eine besonders exakte Positionierung des Kontaktelements sowie dessen Festlegung in der Messposition, um eine Beibehaltung der Messstellung des Langguts mit konstantem Umschlingungswinkel zu gewährleisten.

Nach einer besonders vorteilhaften Ausgestaltung der Erfindung weist die Zusatzstützeinheit dabei einen Schraubmechanismus zur Verlagerung des Kontaktelements zwischen der Außer-Eingriffs-Stellung und der Messposition auf, wobei über die Ausgestaltung des Schraubmechanismus, insbesondere die Wahl der Gewindeparameter eine zuverlässige und lagesichere Verstellung des Kontaktelements erreicht werden kann, wobei gleichzeitig die eingestellte Messposition über den Schraubmechanismus, bspw. aufgrund einer Selbsthemmung des Gewindes, gesichert wird. Durch diese Ausgestaltung der Erfindung wird somit in besonders zuverlässiger Weise eine Beibehaltung des Umschlingungswinkels des Umlenkelements durch das Langgut bei der Erfassung der ersten resultierenden Kraft und zweiten resultierenden Kraft gewährleistet.

Nach einer weiteren Ausgestaltung der Erfindung ist ferner vorgesehen, dass die von dem Kontaktelement in der Messposition auf das Langgut wirkende Kraft einstellbar ist. Durch diese Ausgestaltung der Erfindung kann der auf das Langgut wirkende Anpressdruck des Kontaktelements in der Messposition festgelegt werden. Durch die einstellbare, von dem Kontaktelement auf das Langgut wirkenden Kraft kann in besonders exakter Weise eine Beibehaltung des Umschlingungswinkels des Umlenkelements bei der Erfassung der zweiten resultierenden Kraft gewährleistet werden. Im Falle der Verwendung eines Schraubmechanismus kann zur Einstellung der auf das Langgut wirkenden Kraft bspw. ein Drehmoment festgelegt werden, welches dem gewünschten Anpressdruck des Kontaktelements an dem Langgut entspricht.

Die Ausgestaltung der Verstellbarkeit der ersten Stützeinheit derart, dass das erste Führungselement zwischen der Freigabestellung, in der das Langgut in die Zugkraftmessvorrichtung einfädelbar ist und der Arretierungsposition, in der die erste resultierende Kraft ermittelt wird, verlagerbar ist, ist grundsätzlich frei wählbar. So kann bspw. eine lineare Verstellbarkeit des ersten Führungselements vorgesehen sein, bei der dieses im Wesentlichen senkrecht zur Längsachse des Langguts zwischen der Freigabestellung und der Arretierungsposition verstellbar ist. Nach einer besonders vorteilhaften Ausgestaltung der Erfindung ist jedoch vorgesehen, dass die erste Stützeinheit derart ausgebildet ist, dass das Führungselement zwischen der Freigabestellung und der Arretierungsposition verschwenkbar ist. Diese Ausgestaltung der Erfindung ermöglicht eine besonders komfortable Festlegung des Langguts in der Messstellung, wobei über eine definierte Verschwenkbarkeit eine zuverlässige Festlegung der Arretierungsposition möglich ist. Eine besonders zuverlässige Lagesicherung des ersten Führungselements in der Arretierungsposition kann dabei nach einer vorteilhaften Weiterbildung der Erfindung dadurch erreicht werden, dass das Führungselement in der Arretierungsposition gegenüber der Freigabestellung in einer Übertotpunktlage angeordnet ist, wodurch eine ungewollte Rückverlagerung des Führungselements aus der Arretierungsposition in die Freigabestellung wirksam vermieden wird.

Nach einer Weiterbildung der Erfindung ist ferner vorgesehen, dass die erste Stützeinheit, die zweite Stützeinheit und/oder die Umlenkeinrichtung zur Anpassung des ersten Führungselements, des zweiten Führungselements und/oder des Umlenkelements an den Querschnitt des Langguts ausgebildet sind. Gemäß dieser Ausgestaltung der Erfindung sind die Führungselemente und das Umlenkelement bspw. austauschbar an den Stützeinheiten bzw. der Umlenkeinrichtung angeordnet und somit an die Geometrie des zu messenden Langguts anpassbar, wobei hierunter sowohl die aus dem Querschnitt folgende Form des Langguts als auch dessen Durchmesser verstanden wird. So können das erste Führungselement, das zweite Führungselement und/oder das Umlenkelement als Kufen, Rollen, Walzen oder Stangen ausgebildet sein, um eine optimale Anpassung an das zu messende Langgut zu gewährleisten. Darüber hinaus besteht ferner die Möglichkeit, über eine vorteilhafterweise vorgesehene Durchmesseranpassung das erste Führungselement, das zweite Führungselement oder das Umlenkelement an den Durchmesser des zu messenden Langguts anzupassen, welches bevorzugt einen kreisförmigen Querschnitt aufweist.

Im Falle der Durchführung sich wiederholender, im zeitlichen Abstand voneinander durchgeführten Messungen an einem Langgut, ist es für die Vergleichbarkeit der Messergebnisse erforderlich, dass die Ausrichtung der Zugkraftmessvorrichtung an dem Langgut bei den jeweils durchzuführenden Messungen übereinstimmend ist, nachdem aufgrund von auf das Langgut wirkenden Schwerkrafteinflüssen bei wechselnder Positionierung der Zugkraftmessvorrichtung bzw. dessen Ausrichtung gegenüber dem Langgut eine Vergleichbarkeit der Messergebnisse u. U. nicht mehr gegeben ist.

Nach einer vorteilhaften Ausgestaltung der Erfindung ist daher vorgesehen, dass an dem Grundkörper ein Lagesensor zur Ermittlung der räumlichen Ausrichtung des Grundkörpers bei der Erfassung der resultierenden Kräfte angeordnet ist. Diese Ausgestaltung der Erfindung ermöglicht es, insbesondere bei sich wiederholenden Messungen vergleichbare Ergebnisse zu erfassen, welche Rückschlüsse über möglicherweise sich verändernde, auf das Langgut wirkende Zugkräfte ermöglichen. Besonders vorteilhafterweise kann dabei neben einem Lagesensor ferner auch ein GPS-Sensor vorgesehen sein, welcher es ermöglicht, die durchgeführten Messungen zuverlässig den gemessenen Langgütern örtlich zuzuordnen. Eine entsprechende GPS-Einheit kann bspw. direkt an dem Grundkörper angeordnet und mit der Kraftmesseinheit verbunden sein.

Nach einer vorteilhaften Weiterbildung der Erfindung ist vorgesehen, dass die Kraftmesseinheit mit einer Auswerteinheit verbunden ist, die zur Bestimmung und Ausgabe der auf das Langgut wirkenden Zugkraft auf Basis der ersten und zweiten resultierenden Kraft ausgebildet ist. Gemäß dieser Ausgestaltung der Erfindung ist vorgesehen, dass die Auswerteinheit dazu ausgebildet ist, selbsttätig auf Basis der ersten und zweiten resultierenden Kraft kennfeldbasiert die auf das Langgut wirkende Zugkraft zu bestimmen und diese dem Nutzer gegenüber auszugeben, wobei die Ausgabe optisch und/oder akustisch erfolgen kann. Diese Ausgestaltung steigert den Bedienkomfort der Zugkraftmessvorrichtung in ergänzender Weise, nachdem sie eine manuelle Ermittlung der auf das Langgut wirkenden Zugkraft auf Basis der ersten und zweiten resultierenden Kraft durch den Bediener überflüssig macht. Die Auswerteinheit greift hierzu auf die vorbestimmten Kennfelder zu. Die Ausgabe der ermittelten, auf das Langgut wirkenden Zugkraft kann dabei bspw. über eine optische Anzeige, bspw. ein Display und/oder über eine akustische Ausgabe über eine geeignete Lautsprechereinheit erfolgen.

Die Auswerteinheit kann dabei unmittelbar an dem Grundkörper angeordnet sein. Nach einer alternativen Ausgestaltung der Erfindung ist jedoch vorgesehen, dass die Auswerteinheit drahtlos mit der Kraftmesseinheit verbunden ist. Eine drahtlose Verbindung, wobei die Verbindung zwischen der Auswerteinheit und der Kraftmesseinheit bspw. über Bluetooth, WLAN oder dergleichen erfolgt, ermöglicht auch eine zentrale Datenerfassung der mit der Zugkraftmessvorrichtung durchgeführten Messung. Die Auswerteinheit kann dabei bspw. in ein Laptop, Tablet oder dergleichen integriert sein.

Besonders vorteilhafterweise ist vorgesehen, dass die Auswerteinheit mit einer Speichereinheit datenübertragend verbunden ist, in der die Kennfelder zur Bestimmung der auf das Langgut wirkenden Zugkraft auf Basis der ersten und zweiten resultierenden Kraft hinterlegt sind und/oder die zur Dokumentation der Messvorgänge ausgebildet sind. Die Verwendung einer Speichereinheit ermöglicht es, diese mit geeigneten Kennfeldern zu versehen, welche zur Bestimmung der auf das Langgut wirkenden Zugkraft auf Basis der ersten und zweiten resultierenden Kraft verwendet werden. Auch ermöglicht die Verwendung einer Speichereinheit die Aktualisierung sowie Ergänzung der Auswerteinheit mit weiteren Kennfeldern, welche ein breiteres Einsatzfeld der Zugkraftmessvorrichtung ermöglichen. Darüber hinaus ermöglicht die Verwendung einer Speichereinheit die Dokumentation der Messvorgänge, sodass diese zuverlässig hinterlegt und abrufbar sind. Die Speichereinheit kann dabei sowohl drahtlos als auch über entsprechende Leitungen mit der Auswerteinheit verbunden sein.

Nach einer besonders vorteilhaften Ausgestaltung der Erfindung ist vorgesehen, dass die Auswerteinheit in ein mobiles Handgerät mit einer Anzeigeeinheit zur optischen Darstellung integriert ist. Die Verwendung eines mobilen Handgeräts ermöglicht einen besonders flexiblen und einfachen Einsatz der Zugkraftmessvorrichtung sowie die Erfassung der auf das Langgut wirkenden Zugkraft sowie dessen Dokumentation. Nach einer besonders vorteilhaften Ausgestaltung der Erfindung ist dabei vorgesehen, dass das mobile Handgerät durch ein Mobiltelefon gebildet wird, wobei die Auswerteinheit und die Speichereinheit durch eine geeignete, auf dem Mobiltelefon ablaufende Applikation abgebildet werden.

Ergänzend oder alternativ kann nach einer weiteren vorteilhaften Ausgestaltung der Erfindung der Grundkörper eine mit der Auswerteinheit verbundene Anzeigeeinheit aufweisen. Diese Ausgestaltung der Erfindung ermöglicht es bspw., dem Bediener über die Anzeigeeinheit den Ablauf des Messvorgangs vorzugeben und/oder den Abschluss eines Messvorgangs anzuzeigen, sodass dieser hiernach den Messvorgang beenden und einen weiteren Messvorgang an einem anderen zu messenden Langgut beginnen kann. Die Anzeigeeinheit kann dabei bspw. als LED-Display ausgeführt sein, welches es dem Bediener in besonders komfortabler Weise ermöglicht, den Fortschritt des Messvorgangs, insbesondere dessen Beendigung zu erfassen.

Nach einer weiteren vorteilhaften Ausgestaltung der Erfindung ist ferner vorgesehen, dass die Auswerteinheit mit einer akustisch wirkenden Ausgabeeinheit verbunden ist. Eine akustisch wirkende Ausgabeeinheit ermöglicht es dabei, dem Bediener über Sprachausgabe und/oder Signaltöne den Status, den Fortschritt des Messvorgangs, insbesondere dessen Beendigung oder dergleichen, anzuzeigen.

Besonders bevorzugt ist die Zugkraftmessvorrichtung als mobile Zugkraftmessvorrichtung ausgebildet, wodurch sich diese universell einsetzen lässt.

Ein Ausführungsbeispiel der Erfindung wird nachstehend mit Bezug auf die Zeichnung erläutert. In den Zeichnungen zeigen:

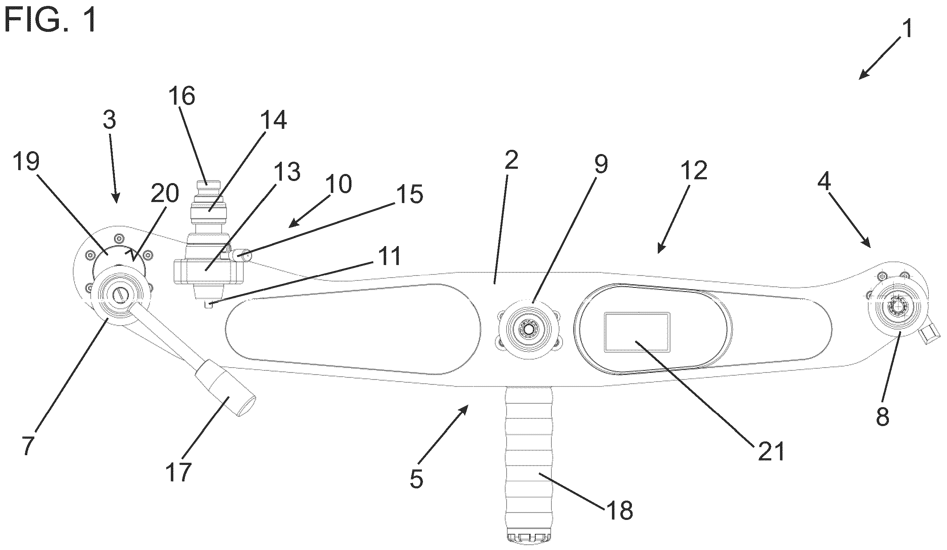

- Fig. 1: eine Vorderansicht einer Ausführungsform einer mobilen Zugkraftmessvorrichtung.

Figur 1 zeigt eine Ausführungsform einer mobilen Zugkraftmessvorrichtung 1 mit einem Grundkörper 2, an dem im Abstand voneinander außenseitig eine erste Stützeinheit 3 und eine zweite Stützeinheit 4 angeordnet sind. Mittig zwischen der ersten Stützeinheit 3 und der zweiten Stützeinheit 4 ist an dem Grundkörper 2 eine Umlenkeinrichtung 5 angeordnet, die mit einer hier nicht dargestellten Kraftmesseinheit verbunden ist. Die Anordnung der ersten und zweiten Stützeinheit 3, 4 und der Umlenkeinrichtung 5 an dem Grundkörper 2 ist so gewählt, dass ein hier nicht dargestelltes zu messendes Langgut in seiner Messstellung an der Zugkraftmessvorrichtung 1 derart angeordnet ist, dass das Langgut - bezogen auf die Darstellung in Figur 1 - im eingefädelten Zustand unter die erste und zweite Stützeinheit 3, 4 und über die Umlenkeinrichtung 5 geführt wird.

Die erste Stützeinheit 3 weist ein erstes drehbares Führungselement 7 auf, das an einer verdrehbar in einer Öffnung 20 des Grundkörpers 2 angeordneten Lagerscheibe 19 zwischen der in Figur 1 dargestellten Arretierungsposition und einer hier nicht dargestellten Freigabestellung verstellbar ist. Die zweite Stützeinheit 4 weist ein an dem Grundkörper 2 angeordnetes zweites drehbar gelagertes zweites Führungselement 8 auf. Im Bereich der Umlenkeinrichtung 5 dient ein Umlenkelement 9 zur Aufnahme des Langguts. Das Umlenkelement 9 ist derart mit der hier nicht dargestellten Kraftmesseinheit verbunden, dass von dem Langgut in der Messstellung durch eine Teilumschlingung des Umlenkelements 9 auf dieses wirkende resultierende Kräfte ermittelt werden können.

Die Anordnung und Entnahme eines zu messenden Langguts an der Zugkraftmessvorrichtung 1 erfolgt in der hier nicht dargestellten Freigabestellung des ersten Führungselements 7 der ersten Stützeinheit 3. In dieser Position des ersten Führungselements 7 lässt sich das Langgut belastungsfrei in der zuvor beschriebenen Weise in den Bereich zwischen der ersten Stützeinheit 3, der zweiten Stützeinheit 4 und der Umlenkeinrichtung 5 einfädeln. Nach der erfolgten Anordnung des Langguts erfolgt eine Verlagerung des ersten Führungselements 7 in die in Figur 1 dargestellte Arretierungsposition, wobei hierzu mittels des Bedienhebels 17 das erste Führungselement 7 gegenüber dem Grundkörper 2 innerhalb der Öffnung 20 in die in Figur 1 dargestellte Arretierungsposition verdreht wird, in der es sich gegenüber der Freigabestellung in einer Übertotpunktlage befindet.

In der Arretierungsposition des ersten Führungselements 7 sind dieses und das zweite Führungselement 8 derart gegenüber dem Langgut angeordnet, dass an dem Umlenkelement 9 eine Teilumschlingung mit einem Umschlingungswinkel von bevorzugt <5° besteht. Das Umlenkelement 9 ist derart mit der Kraftmesseinheit verbunden, dass aus der Teilumschlingung auf das Umlenkelement 9 wirkende Kräfte erfasst werden. Diese können über ein Display 21 einer Auswerteinheit 12, welche mit der Kraftmesseinheit verbunden ist, angezeigt werden.

Zur zuverlässigen Ermittlung der auf das Langgut wirkenden Zugkraft, das bei der Teilumschlingung in der Messstellung eine biegeelastische Verformung erfährt, weist die Zugkraftmessvorrichtung 1 im Bereich zwischen der ersten Stützeinheit 3 und der Umlenkeinrichtung 5 eine Zusatzstützeinheit 10 auf. Diese wird durch einen an dem Grundkörper 2 angeordneten Träger 13 gebildet, an dem eine mit einem Kontaktelement 11 verbundene Zustellvorrichtung 14 über einen Hebel 15 lösbar festgelegt ist. Über einen Drehknopf 16 der Zusatzstützeinheit 10 kann das Kontaktelement 11 im Wesentlichen senkrecht zu einem an der Zugkraftmessvorrichtung 1 angeordneten Langgut verstellt werden.

Nach erfolgter Erfassung einer ersten resultierenden Kraft bei der die Messstellung durch die erste und zweite Stützeinheit 24 bewirkt wird, erfolgt über einen Drehknopf 16 eine Verstellung des Kontaktelements 11 bis in eine Position, in der das Kontaktelement 11 derart an dem Langgut angeordnet ist, dass nach einer anschließend erfolgenden Verlagerung des ersten Führungselements 7 aus der Arretierungsposition in die Freigabeposition das Langgut in seiner zuvor eingestellten Messstellung verbleibt, in der der Teilumschlingungswinkel beibehalten wird. In der dann durch die Zusatzstützeinheit 10 und die zweite Stützeinheit 4 bewirkten Messstellung des Langguts erfolgt eine Erfassung einer zweiten resultierenden Kraft, welche aufgrund eines veränderten Hebelarms infolge des unterschiedlichen Abstands des Kontaktelements 11 und des ersten Führungselements 7 von dem Umlenkelement 9 von der ersten resultierenden Kraft abweicht.

In der Auswerteinheit 12 erfolgt unter Berücksichtigung der ersten resultierenden Kraft, der zweiten resultierenden Kraft sowie deren Beziehung zueinander, insbesondere deren Differenz unter Abgleich mit zuvor hinterlegten Kennfeldern eine Angabe der tatsächlichen auf das Langgut wirkenden Zugkraft. Darüber hinaus erfolgt über eine hier nicht dargestellte Speichereinheit der Auswerteinheit 12 eine Dokumentation des Messvorgangs.

Ein mit dem Grundkörper 2 verbundener Handgriff 18 dient neben der Handhabbarkeit der Zugkraftmessvorrichtung 1 ferner zur Aufnahme eines hier nicht dargestellten Lagesensors mittels dem die räumliche Lage der Zugkraftmessvorrichtung 1, d. h. die Ausrichtung der Zugkraftmessvorrichtung 1 gegenüber allen drei Raumachsen, erfasst werden kann. Die Kenntnis über die Lage der Zugkraftmessvorrichtung 1 erlaubt es, eine Schwerkraftkompensation der ermittelten Messwerte, d. h. der ersten und zweiten resultierenden Kraft, durchzuführen. Die Schwerkraftkompensation ermöglicht eine besonders exakte Erfassung der auf das Langgut wirkenden Zugkräfte, da die Messwerte durch die Ausrichtung der Zugkraftmessvorrichtung 1 bei dem Messvorgang beeinflusst werden. Ursache hierfür sind Schwerkrafteinflüsse, die jedoch über den Lagesensor kompensiert werden können, sodass ein um den Schwerkrafteinfluss bereinigtes Messergebnis angezeigt werden kann. Der Lagesensor ist hierzu bspw. derart mit der Auswerteinheit 12 gekoppelt, dass in dieser eine automatische Verarbeitung der durch den Lagesensor ermittelten Daten erfolgt. Die durch den Lagesensor ermittelten Messdaten werden somit elektronisch um den Schwerkrafteinfluss bereinigt. (19237.0)

### Bezugszeichenliste

- 1: Zugkraftmessvorrichtung
- 2: Grundkörper
- 3: erste Stützeinheit
- 4: zweite Stützeinheit
- 5: Umlenkeinrichtung
- 7: erstes Führungselement
- 8: zweites Führungselement
- 9: Umlenkelement
- 10: Zusatzstützeinheit
- 11: Kontaktelement
- 12: Auswerteinheit
- 13: Träger
- 14: Zustellvorrichtung
- 15: Hebel
- 16: Drehknopf
- 17: Bedienhebel
- 18: Handgriff
- 19: Lagerscheibe
- 20: Öffnung
- 21: Display

## Patentansprüche

1. Zugkraftmessvorrichtung (1) zur Erfassung der auf ein Langgut wirkenden Zugkraft, mit einem Grundkörper (2), aufweisend
- eine erste äußere Stützeinheit (3) mit einem zwischen einer das Langgut freigebenden Freigabestellung und einer das Langgut in einer Messstellung festlegenden Arretierungsposition verstellbaren ersten Führungselement (7),
- eine zweite äußere Stützeinheit (4) mit einem mit dem Langgut in Anlage bringbaren zweiten Führungselement (8),
- eine zwischen der ersten und zweiten Stützeinheit (3, 4) angeordneten Umlenkeinrichtung (5) mit einem Umlenkelement (9) zur teilumschlingenden Anordnung des Langguts in der Messstellung und
- einer mit der Umlenkeinrichtung (5) verbundenen Kraftmesseinheit zur Erfassung und Anzeige einer ersten aus der Teilumschlingung auf das Umlenkelement (9) wirkenden resultierenden Kraft,
**dadurch gekennzeichnet, dass**
zur Erfassung und/oder Anzeige einer zweiten aus der Teilumschlingung wirkenden resultierenden Kraft durch die Kraftmesseinheit an dem Grundkörper (2) beabstandet zur ersten Stützeinheit (3) eine Zusatzstützeinheit (10) mit einem Kontaktelement (11) angeordnet ist, das zwischen einer das Langgut in seiner Position an der Zusatzstützeinheit (10) in der Messstellung des ersten Führungselements (7) festlegenden Messposition und einer von dem Langgut beabstandeten Außer-Eingriffs-Position verstellbar ist.

2. Zugkraftmessvorrichtung nach Anspruch 1, **dadurch gekennzeichnet, dass** das Kontaktelement (11) quer zur Längsachse des Langguts verstellbar an der Zusatzstützeinheit (10) angeordnet ist.

3. Zugkraftmessvorrichtung nach Anspruch 1 oder 2, **dadurch gekennzeichnet, dass** die Zusatzstützeinheit (10) einen Schraubmechanismus zur Verlagerung des Kontaktelements (11) zwischen der Außer-Eingriffs-Stellung und der Messposition aufweist.

4. Zugkraftmessvorrichtung nach einem oder mehreren der vorhergehenden Ansprüche, **dadurch gekennzeichnet, dass** die von dem Kontaktelement (11) in der Messposition auf das Langgut wirkende Kraft einstellbar ist.

5. Zugkraftmessvorrichtung nach einem oder mehreren der vorhergehenden Ansprüche, **dadurch gekennzeichnet, dass** die erste Stützeinheit (3) derart ausgebildet ist, dass das erste Führungselement (7) zwischen der Freigabestellung und der Arretierungsposition verschwenkbar ist.

6. Zugkraftmessvorrichtung nach einem oder mehreren der vorhergehenden Ansprüche, **dadurch gekennzeichnet, dass** das erste Führungselement (7) in der Arretierungsposition gegenüber der Freigabestellung in einer Übertotpunktlage angeordnet ist.

7. Zugkraftmessvorrichtung nach einem oder mehreren der vorhergehenden Ansprüche, **dadurch gekennzeichnet, dass** die erste Stützeinheit (3), die zweite Stützeinheit (4) und/oder die Umlenkeinrichtung (5) zur Anpassung des ersten Führungselements (7), des zweiten Führungselements (8) und/oder des Umlenkelements (9) an den Querschnitt des Langguts ausgebildet sind.

8. Zugkraftmessvorrichtung nach einem oder mehreren der vorhergehenden Ansprüche, **dadurch gekennzeichnet, dass** an dem Grundkörper (2) ein Lagesensor zur Ermittlung der räumlichen Ausrichtung des Grundkörpers (2) bei der Erfassung der resultierenden Kräfte angeordnet ist.

9. Zugkraftmessvorrichtung nach einem oder mehreren der vorhergehenden Ansprüche, **dadurch gekennzeichnet, dass** die Kraftmesseinheit mit einer Auswerteinheit (12) verbunden ist, die zur Bestimmung und Ausgabe der auf das Langgut wirkenden Zugkraft auf Basis der ersten und zweiten resultierenden Kraft ausgebildet ist.

10. Zugvorrichtung nach einem oder mehreren der vorhergehenden Ansprüche, **dadurch gekennzeichnet, dass** die Auswerteinheit (12) drahtlos mit der Kraftmesseinheit verbunden ist.

11. Zugvorrichtung nach einem oder mehreren der vorhergehenden Ansprüche, **dadurch gekennzeichnet, dass** die Auswerteinheit (12) mit einer Speichereinheit datenübertragend verbunden ist, in der Kennfelder zur Bestimmung der auf das Langgut wirkenden Zugkraft auf Basis der ersten und zweiten resultierenden Kraft hinterlegt sind und/oder die zur Dokumentation der Messvorgänge ausgebildet sind.

12. Zugvorrichtung nach einem oder mehreren der vorhergehenden Ansprüche, **dadurch gekennzeichnet, dass** die Auswerteinheit (12) in ein mobiles Handgerät mit einer Anzeigeeinheit zur optischen Darstellung integriert ist.

13. Zugvorrichtung nach einem oder mehreren der vorhergehenden Ansprüche, **dadurch gekennzeichnet, dass** der Grundkörper (2) eine mit der Auswerteinheit (12) verbundene Anzeigeeinheit aufweist.

14. Zugvorrichtung nach einem oder mehreren der vorhergehenden Ansprüche, **dadurch gekennzeichnet, dass** die Auswerteinheit (12) mit einer akustisch wirkenden Ausgabeeinheit verbunden ist.

## Claims

1. Tensile force measuring device (1) for detecting the tensile force acting on an elongate article, with a base body (2) comprising
- a first outer support unit (3) with a first guide element (7) that can be adjusted between a release position that releases the elongate article and a locking position that secures the elongate article in a measuring positioning,
- a second outer support unit (4) with a second guide element (8) that can be brought into contact with the elongate article,
- a deflection device (5) arranged between the first and second support units (3, 4) with a deflection element (9) for partial wrapping of the elongate article in the measuring positioning, and
- a force measuring unit connected to the deflection device (5) for detecting and displaying a first resultant force acting on the deflection element (9) from the partial wrapping,
**characterized in that**
for detecting and/or displaying, by means of the force measuring unit, a second resulting force acting from the partial wrapping, an additional support unit (10) with a contact element (11) is arranged on the base body (2) at a distance from the first support unit (3), which contact element (11) can be adjusted between a measuring position that fixes the elongate article in its position on the additional support unit (10) in the measuring positioning of the first guide element (7) and an out-of-engagement position spaced apart from the elongate article.

2. Tensile force measuring device according to claim 1, **characterized in that** the contact element (11) is arranged on the additional support unit (10) so that it can be adjusted transversely to the longitudinal axis of the elongate article.

3. Tensile force measuring device according to claim 1 or 2, **characterized in that** the additional support unit (10) has a screw mechanism for moving the contact element (11) between the out-of-engagement position and the measuring position.

4. Tensile force measuring device according to one or more of the preceding claims, **characterized in that** the force exerted by the contact element (11) on the elongate article in the measuring position is adjustable.

5. Tensile force measuring device according to one or more of the preceding claims, **characterized in that** the first support unit (3) is designed such that the first guide element (7) can be pivoted between the release position and the locking position.

6. Tensile force measuring device according to one or more of the preceding claims, **characterized in that** the first guide element (7) is arranged in an over-dead-centre position in the locking position compared to the release position.

7. Tensile force measuring device according to one or more of the preceding claims, **characterized in that** the first support unit (3), the second support unit (4) and/or the deflection device (5) are designed to adapt the first guide element (7), the second guide element (8) and/or the deflection element (9) to the cross-section of the elongate article.

8. Tensile force measuring device according to one or more of the preceding claims, **characterized in that** a position sensor is arranged on the base body (2) to determine the spatial orientation of the base body (2) when detecting the resulting forces.

9. Tensile force measuring device according to one or more of the preceding claims, **characterized in that** the force measuring unit is connected to an evaluation unit (12) which is designed to determine and output the tensile force acting on the elongate article on the basis of the first and second resulting forces.

10. Pulling device according to one or more of the preceding claims, **characterized in that** the evaluation unit (12) is connected wirelessly to the force measuring unit.

11. Pulling device according to one or more of the preceding claims, **characterized in that** the evaluation unit (12) is connected via data transmission to a memory unit **in** which characteristic maps for determining the tensile force acting on the elongate article based on the first and second resultant forces are stored and/or which are designed to document the measurement operations.

12. Pulling device according to one or more of the preceding claims, **characterized in that** the evaluation unit (12) is integrated into a mobile handheld device with a display unit for visual representation.

13. Pulling device according to one or more of the preceding claims, **characterized in that** the base body (2) has a display unit connected to the evaluation unit (12).

14. Pulling device according to one or more of the preceding claims, **characterized in that** the evaluation unit (12) is connected to an acoustically acting output unit.

## Revendications

1. Dispositif de mesure de force de traction (1) pour détecter la force de traction agissant sur un objet long, avec un corps de base (2), présentant
- une première unité de support extérieure (3) avec un premier élément de guidage (7) réglable entre une position de déverrouillage libérant l'objet long et une position de verrouillage fixant l'objet long dans une position de mesure,
- une deuxième unité de support extérieure (4) avec un deuxième élément de guidage (8) pouvant être mis en contact avec l'objet long,
- un dispositif de renvoi (5) disposé entre la première et la deuxième unité de support (3, 4) avec un élément de renvoi (9) pour la disposition en enroulement partiel de l'objet long dans la position de mesure et
- une unité de mesure de force reliée au dispositif de renvoi (5) pour détecter et afficher une première force résultante agissant sur l'élément de renvoi (9) à partir de l'enroulement partiel,
**caractérisé en ce que**
pour la détection et/ou l'affichage d'une deuxième force résultante agissant à partir de l'enroulement partiel, l'unité de mesure de force dispose sur le corps de base (2), à distance de la première unité de support (3), une unité de support supplémentaire (10) avec un élément de contact (11) qui peut être réglé entre une position de mesure fixant l'objet long dans sa position sur l'unité de support supplémentaire (10) dans la position de mesure du premier élément de guidage (7) et une position hors intervention à distance de l'objet long.

2. Dispositif de mesure de force de traction selon la revendication 1, **caractérisé en ce que** l'élément de contact (11) est disposé sur l'unité de support supplémentaire (10) de manière réglable transversalement à l'axe longitudinal de l'objet long.

3. Dispositif de mesure de force de traction selon la revendication 1 ou 2, **caractérisé en ce que** l'unité de support supplémentaire (10) comporte un mécanisme à vis pour déplacer l'élément de contact (11) entre la position hors intervention et la position de mesure.

4. Dispositif de mesure de force de traction selon une ou plusieurs des revendications précédentes, **caractérisé en ce que** la force exercée par l'élément de contact (11) sur l'objet long dans la position de mesure est réglable.

5. Dispositif de mesure de force de traction selon une ou plusieurs des revendications précédentes, **caractérisé en ce que** la première unité de support (3) est configurée de manière à ce que le premier élément de guidage (7) puisse pivoter entre la position de déverrouillage et la position de verrouillage.

6. Dispositif de mesure de force de traction selon une ou plusieurs des revendications précédentes, **caractérisé en ce que** le premier élément de guidage (7) est disposé dans une position au-delà du point mort dans la position de verrouillage par rapport à la position de déverrouillage.

7. Dispositif de mesure de force de traction selon une ou plusieurs des revendications précédentes, **caractérisé en ce que** la première unité de support (3), la deuxième unité de support (4) et/ou le dispositif de renvoi (5) sont configurés pour adapter le premier élément de guidage (7), le deuxième élément de guidage (8) et/ou l'élément de renvoi (9) à la section de l'objet long.

8. Dispositif de mesure de force de traction selon une ou plusieurs des revendications précédentes, **caractérisé en ce qu'**un capteur de position est disposé sur le corps de base (2) pour déterminer l'orientation spatiale du corps de base (2) lors de la détection des forces résultantes.

9. Dispositif de mesure de force de traction selon une ou plusieurs des revendications précédentes, **caractérisé en ce que** l'unité de mesure de force est reliée à une unité d'évaluation (12) qui est conçue pour déterminer et délivrer la force de traction agissant sur l'objet long sur la base de la première et de la deuxième force résultante.

10. Dispositif de traction selon une ou plusieurs des revendications précédentes, **caractérisé en ce que** l'unité d'évaluation (12) est reliée sans fil à l'unité de mesure de force.

11. Dispositif de traction selon une ou plusieurs des revendications précédentes, **caractérisé en ce que** l'unité d'évaluation (12) est reliée par transmission de données à une unité de mémoire dans laquelle sont enregistrés des diagrammes caractéristiques pour déterminer la force de traction agissant sur l'objet long sur la base de la première et de la deuxième force résultante et/ou qui sont conçus pour documenter les opérations de mesure.

12. Dispositif de traction selon une ou plusieurs des revendications précédentes, **caractérisé en ce que** l'unité d'évaluation (12) est intégrée dans un appareil portatif mobile avec une unité d'affichage pour la représentation optique.

13. Dispositif de traction selon une ou plusieurs des revendications précédentes, **caractérisé en ce que** le corps de base (2) comporte une unité d'affichage reliée à l'unité d'évaluation (12).

14. Dispositif de traction selon une ou plusieurs des revendications précédentes, **caractérisé en ce que** l'unité d'évaluation (12) est reliée à une unité de sortie à effet acoustique.
